# EUROPEAN PATENT APPLICATION

(11) **EP 3 214 592 A1**
(43) Date of publication of application: **06.09.2017**
(21) Application number: 17156901.5
(22) Date of filing: 20.02.2017
(51) Int. Cl.: G06Q 20/00

(54) **INFORMATION PROCESSING DEVICE AND PROGRAM**

(30) Priority: 29.02.2016 JP 2016037966
(71) Applicant: Toshiba TEC Kabushiki Kaisha, Tokyo 141-0032 (JP)
(72) Inventor: NISHIKAWA, Hiroshi, Shinagawa-ku, Tokyo 141-8562 (JP)
(74) Representative: Takeuchi, Maya

(57) **Abstract**

According to one embodiment, there are provided an estimation unit that estimates the number of customers to be processed during a predetermined period in the present or future as the number of expected customers based on the number of past customers recorded as a history; a storage unit that stores processing capability indicating the number of customers who may be processed per unit time in a cash register form in association with the cash register form realizable in a cash register installed in a store; a derivation unit that derives a form and the number of cash registers capable of processing the number of expected customers based on the processing capability of each cash register form stored in the storage unit; and an output unit that outputs instruction information for instructing as many derived cash register forms of cash registers as the derived number of cash registers to be operated.

## Description

### FIELD

The present invention relates to information processing technologies in general, used e.g. in a store, and embodiments described herein relate in particular to an information processing device and system, as well as a method for performing such information processing, and a computer-readable medium and program product for performing such a method.

### BACKGROUND

In the related art, in a store such as a supermarket, when a queue waiting for accounting occurs, a clerk requests support after checking the queue directly or via a surveillance camera or the like. Therefore, in the store, when the support request is received, measures to alleviate the congestion of cash registers are taken. Examples of such measures include operating cash registers (checkout lane) in a non-operation state or changing the cash registers in one-person system into two-person system. Further, in the related art, there has been proposed a system for instructing an operation of cash registers installed in an area where the number of sales registrations is large, on condition that it is determined that the number of people lined up in the cash registers is large.

By the way, cash registers used in a store is not limited to the same type, but there are cases where a plurality of types of cash registers with different cash register forms such as a way of accounting are mixed. Further, even for the cash registers of the same type, there are cases where the cash registers are operated by switching the cash register form thereof between the one-person system and the two-person system as described above. In this way, in a case where cash register forms are different, generally, processing capability, which is the number of customers who may be processed per unit time, is different. However, in the systems in the related art, since the form and processing capability of each cash register are not considered, there is a possibility that an appropriate cash register may not be operated.

To solve such problems, there is provided an information processing device comprising:
an estimation unit that estimates the number of customers to be processed during a predetermined period in the present or future as the number of expected customers based on the number of past customers recorded as a history;
a storage unit that stores processing capability indicating the number of customers who may be processed per unit time in a cash register form in association with the cash register form realizable in a cash register installed in a store;
a derivation unit that derives a cash register form and the number of cash registers capable of processing the number of expected customers based on the processing capability of each cash register form stored in the storage unit; and
an output unit that outputs instruction information for instructing as many derived cash register forms of cash registers as the derived number of cash registers to be operated.

Preferably, the device further comprises:
an acceptance unit that accepts a support request from an external device,
wherein, on condition that the acceptance unit accepts the support request, the estimation unit sets a time range when the current date and time falls as the predetermined period and estimates the number of expected customers based on the number of past customers corresponding to the predetermined period in the history.

Preferably still, in a case where the number of cash registers derived from the derivation unit exceeds the number of cash registers installed in the store, the output unit outputs instruction information for warning that there is a possibility that the number of expected customers may not be processed.

Preferably yet, the output unit outputs the instruction information to each of portable terminals carried by a clerk of the store.

The invention also relates to an information processing system comprising:
an estimation unit that estimates the number of customers to be processed during a predetermined period in the present or future as the number of expected customers based on the number of past customers recorded as a history;
a storage unit that stores processing capability indicating the number of customers who may be processed per unit time in a cash register form in association with the cash register form realizable in a cash register installed in a store;
a derivation unit for deriving a cash register form and the number of cash registers capable of processing the number of expected customers based on the processing capability of each cash register form stored in the storage unit; and
an output unit that outputs instruction information for instructing as many derived cash register forms of cash registers as the derived number of cash registers to be operated.

Suitably, the system further comprises:
an acceptance unit that accepts a support request from an external device,
wherein, on condition that the acceptance unit accepts the support request, the estimation unit sets a time range when the current date and time falls as the predetermined period and estimates the number of expected customers based on the number of past customers corresponding to the predetermined period in the history.

Suitably still, in a case where the number of cash registers derived from the derivation unit exceeds the number of cash registers installed in the store, the output unit outputs instruction information for warning that there is a possibility that the number of expected customers may not be processed.

Suitably yet, the output unit outputs the instruction information to each of portable terminals carried by a clerk of the store.

The invention further relates to a method for processing information, comprising the steps of:
- estimating, by an estimation unit, the number of customers to be processed during a predetermined period in the present or future as the number of expected customers based on the number of past customers recorded as a history;
- storing, by a storage unit, processing capability indicating the number of customers who may be processed per unit time in a cash register form in association with the cash register form realizable in a cash register installed in a store;
- deriving, by a derivation unit, a cash register form and the number of cash registers capable of processing the number of expected customers based on the processing capability of each cash register form stored in the storage unit; and
- outputting, by an output unit, instruction information for instructing as many derived cash register forms of cash registers as the derived number of cash registers to be operated.

Conveniently, the method further comprises the step of:
- accepting, by an acceptance unit, a support request from an external device,
wherein, on condition that the acceptance unit accepts the support request, the estimation unit sets a time range when the current date and time falls as the predetermined period and estimates the number of expected customers based on the number of past customers corresponding to the predetermined period in the history.

Conveniently still, the outputting step comprises outputting, by the output unit, instruction information for warning that there is a possibility that the number of expected customers may not be processed, in a case where the number of cash registers derived from the derivation unit exceeds the number of cash registers installed in the store.

Conveniently yet, the outputting step comprises outputting, by the output unit, the instruction information to each of portable terminals carried by a clerk of the store.

The invention also concerns a computer-readable medium having computer-executable instructions adapted to cause the computer system to perform the method according to any one of claims 9 to 12.

The invention further concerns a A computer program product comprising program code means stored on a computer readable medium for performing the method according to any one of claims 9 to 12, when the program product is run on a computer.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a diagram schematically showing a configuration of an in-store system according to an embodiment.
FIG. 2 is a diagram showing a configuration example of a POS terminal.
FIG. 3 is a diagram showing a configuration example of a management server.
FIG. 4 is a diagram schematically showing an example of a data configuration of a cash register management table.
FIG. 5 is a diagram schematically showing an example of the data configuration of a capacity management table.
FIG. 6 is a diagram showing a configuration example of a clerk terminal.
FIG. 7 is a flowchart showing an example of processing executed by the management server.
FIG. 8 is a sequence diagram showing an example of a cooperative processing performed in a cash register terminal, the management server, and the clerk terminal.

### DETAILED DESCRIPTION

In general, according to one embodiment, there are provided an information processing device and a program which may derive operation planning of more appropriate cash registers and perform operation instruction.

The information processing device of the embodiment includes an estimation unit, a storage unit, a derivation unit, and an output unit. The estimation unit estimates the number of customers to be processed during a predetermined period in the present or future as the number of expected customers based on the number of past customers recorded as a history. The storage unit stores processing capability indicating the number of customers who may be processed per unit time in a cash register form in association with the cash register form realizable in a cash register installed in a store. The derivation unit derives a cash register form and the number of cash registers capable of processing the number of expected customers based on the processing capability of each cash register form stored in the storage unit. The output unit outputs instruction information for instructing as many derived cash register forms of cash registers as the derived number of cash registers to be operated.

Embodiments of the information processing device and the program will be described in detail below with reference to the accompanying drawings. In the following embodiment, an example in which the information processing device and the program of the exemplary embodiment are applied to a store such as a supermarket will be described, but the exemplary embodiment is not limited by this embodiment.

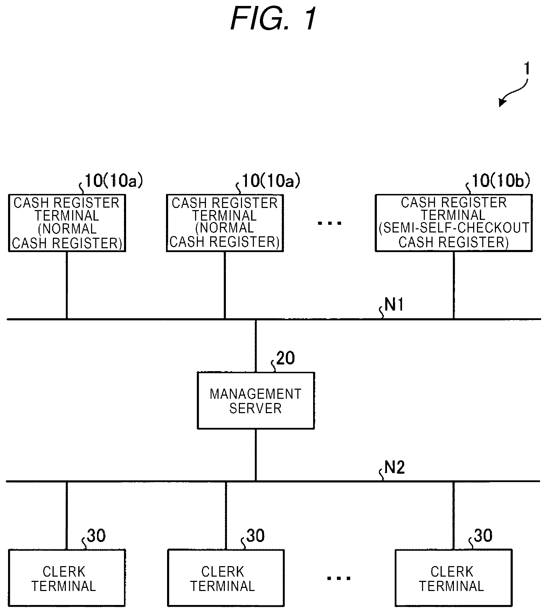

FIG. 1 is a diagram schematically showing a configuration of an in-store system 1 according to the embodiment. The in-store system 1 includes cash register terminals 10, a management server 20, and clerk terminals 30. The cash register terminals 10 and the management server 20 are connected to each other via a network N1. Further, the management server 20 and the clerk terminals 30 are connected to each other via a network N2. Here, the networks N1 and N2 may be the same network.

The cash register terminal 10 is a point of sale (POS) register device installed in a store. The cash register terminal 10 performs registration and accounting (settlement) of commodities for one transaction by referring to a commodity master (not shown) in which a commodity code, unit price, and the like of each commodity being sold in the store, are stored.

The in-store system 1 of the embodiment includes a plurality of the cash register terminals 10. The in-store system 1 realizes a plurality of cash register forms by the plurality of cash register terminals 10. The cash register form means a way of registration and accounting of a commodity, an arrangement type of checkers and cashiers, and the like.

More specifically, the in-store system 1 realizes a plurality of cash register forms by including a plurality of types (device type) of the cash register terminals 10. For example, the in-store system 1 includes a normal cash register 10a as a type of the cash register terminal 10, which is a cash register form in which a clerk performs registration and accounting of commodities. Further, the in-store system 1 includes a semi-self-checkout cash register 10b as a type of the cash register terminal 10, which is a cash register form in which customers perform accounting themselves after a clerk performs registration of commodities.

Further, even for the cash register terminals 10 of the same type, it is possible to realize a plurality of cash register forms by switching operation methods and the like. For example, in the in-store system 1, two cash register forms are realized by operating the normal cash register 10a by switching between the one-person system and the two-person system. Here, the one-person system means a cash register form in which one clerk performs registration and accounting of commodities. In addition, the two-person system means a cash register form in which two clerks cooperate and perform registration and accounting of commodities respectively.

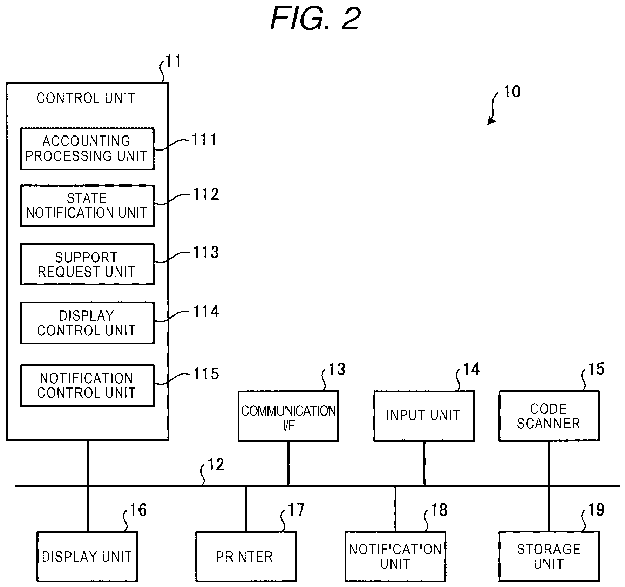

The cash register terminals 10 include, for example, a configuration as shown in FIG. 2. Here, FIG. 2 is a diagram showing a configuration example of the cash register terminal 10. As shown in FIG. 2, the cash register terminal 10 includes a control unit 11 in a computer configuration composed of a central processing unit (CPU), read only memory (ROM), random access memory (RAM), and the like. Further, the control unit 11 includes a timer function, such as a real time clock (RTC).

In the control unit 11, a communication interface (I/F) 13, an input unit 14, a code scanner 15, a display unit 16, a printer 17, a notification unit 18, and a storage unit 19 are connected to each other via a bus 12.

The communication I/F 13 is a wired or wireless communication I/F for connecting to the network N1. The input unit 14 includes an input device such as a keyboard and a pointing device. The input unit 14 receives an operation input from an operator via the input device and notifies the control unit 11 of a signal corresponding to the operation content thereof. For example, the input device includes a numeric key for entering an amount of money, a number of sales, and the like, and a calculation key for instructing total output of commodities for which sales registration is performed as one transaction. Further, the input device includes a support request key for outputting a support request, for example, when a queue waiting for accounting occurs.

The code scanner 15 is a scanner device for optically reading code symbols such as bar codes and two-dimensional codes. The code scanner 15 reads a commodity ID and the like from which a specific commodity can be identified from the code symbol attached to the commodity.

The display unit 16 includes a display device such as a liquid crystal display. The display unit 16 displays various pieces of information under the control of the control unit 11. The printer 17 is a printer device such as a thermal printer. The printer 17 performs printing of a receipt or a journal under the control of the control unit 11. The notification unit 18 is configured by, for example, a notification device such as an alarm lamp and an indicator. The notification unit 18 performs notification for allowing a lamp to be turned on or the like under the control of the control unit 11. The notification unit 18 and a notification control unit 115 to be described later, may be configured as independent devices so that the operation is enabled even when the power of the cash register terminal 10 is turned off.

The storage unit 19 includes a storage device such as a hard disk drive (HDD) and a solid state drive (SSD). The storage unit 19 stores various programs executed by the control unit 11 (CPU), setting information, and the like.

Further, the cash register terminal 10 includes a functional unit realized by cooperation of the control unit 11 (CPU) and a program stored in the ROM or the storage unit 19. Specifically, the control unit 11 (CPU) executes the program so that functional units such as an accounting processing unit 111, a state notification unit 112, a support request unit 113, a display control unit 114, the notification control unit 115, and the like are realized on the RAM.

The accounting processing unit 111 performs registration of a commodity (sales registration) and accounting processing related to accounting. For example, the accounting processing unit 111 reads commodity information corresponding to a commodity ID from the commodity master based on the commodity ID read from a commodity by the code scanner 15. Further, the accounting processing unit 111 calculates a sales price of a commodity from the unit price included in the commodity information, the number of items sold or the like input via the input unit 14. Further, when registration and accounting for one transaction are completed, the accounting processing unit 111 performs registration of the sales by recording the commodity ID, sales price, or the like of the commodities in a sales master file (not shown) or the like. The accounting processing unit 111 causes the printer 17 to output a receipt indicating the breakdown of the transaction.

The state notification unit 112 cooperates with the communication I/F 13 and notifies the management server 20 of the state of the cash register terminal 10. For example, the state notification unit 112 transmits state information indicating an operation state to the management server 20 when the cash register terminal 10 transitions from a non-operation state to an operation state. Further, the state notification unit 112 transmits state information indicating a non-operation state to the management server 20 when the cash register terminal 10 transitions from an operation state to a non-operation state.

Here, the operation state means a state in which accounting processing by the accounting processing unit 111 may be executed. Further, the non-operation state means a state in which accounting processing may not be executed, for example, in a power-off state or a standby state. In addition to the information indicating an operation state or a non-operation state, the state information includes identification information (hereinafter, referred to as a cash register number) for identifying the cash register terminal 10. In a case where the cash register terminal 10 is the normal cash register 10a and in an operation state, the cash register terminal 10 includes information indicating a cash register form (one-person system or two-person system) in the state information and transmits the information. Further, in a case where the cash register terminal 10 is in an operation state, the cash register terminal 10 may include identification information (clerk ID) for identifying a clerk operating the cash register terminal 10, in the state information.

When an input of a support request key is received via the input unit 14, the support request unit 113 cooperates with the communication I/F 13 and transmits support request information to the management server 20. Here, the support request information includes at least the cash register number of the cash register terminal 10.

The display control unit 114 controls display on the screen of the display unit 16. For example, the display control unit 114 causes the display unit 16 to display an operation screen related to the operation of the cash register terminal 10. Further, the display control unit 114 causes the display unit 16 to display a screen corresponding to various pieces of information transmitted from the management server 20.

In a case where the state of the cash register terminal 10 satisfies a predetermined condition, the notification control unit 115 performs notification by operating the notification unit 18. For example, the notification control unit 115 operates the notification unit 18 on condition that instruction information to be described later is received from the management server 20.

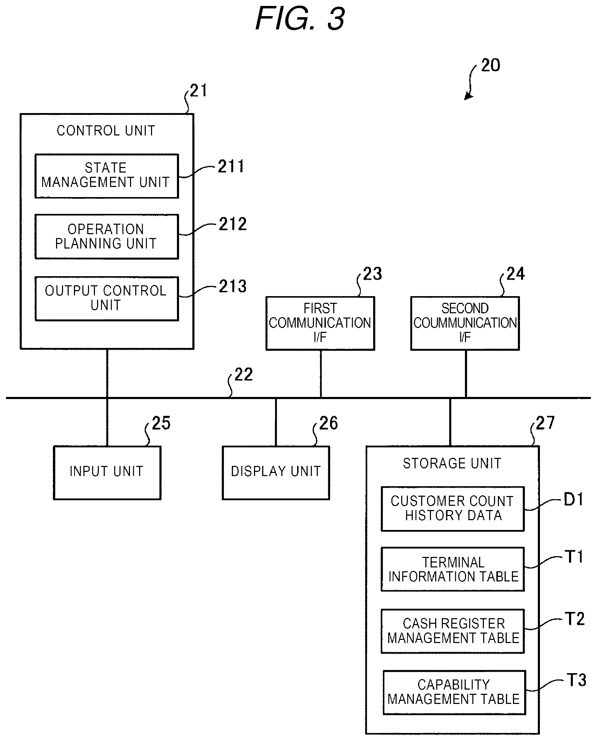

Returning to FIG. 1, the management server 20 is a server device corresponding to the information processing device of the embodiment. The management server 20 includes, for example, a configuration as shown in FIG. 3. Here, FIG. 3 is a diagram showing a configuration example of the management server 20. As shown in FIG. 3, the management server 20 includes a control unit 21 in a computer configuration composed of a CPU, ROM, RAM, and the like. Further, the control unit 21 includes a timer function such as an RTC.

In the control unit 21, a first communication I/F 23, a second communication I/F 24, an input unit 25, a display unit 26, and a storage unit 27 are connected to each other via a bus 22.

The first communication I/F 23 is a wired or wireless communication I/F for connecting to the network N1. Further, the second communication I/F 24 is a wired or wireless communication I/F for connecting to the network N2.

The input unit 25 includes an input device such as a keyboard. The input unit 25 receives an operation input from an operator via the input device and notifies the control unit 21 of a signal corresponding to the operation content thereof. The display unit 26 includes a display device such as a liquid crystal display. The display unit 26 displays various pieces of information under the control of the control unit 21.

The storage unit 27 includes a storage device such as an HDD, and an SSD. The storage unit 27 stores various programs executed by the control unit 21 (CPU) or various setting information.

Further, the storage unit 27 stores a customer count history data D1 in which the number of past customers are recorded. Specifically, the customer count history data D1 holds the number of past customers recorded per predetermined unit time (for example, one hour) as a history. Here, the number of customers may be the number of customers (the number of transactions) that performed actual transactions (accounting processing) or may be the number of customers who visited the store. Further, it is preferable that the customer count history data D 1 holds the history at least for the past one year.

The method of acquiring the number of customers recorded in the customer count history data D1 is not particularly limited, and a known method may be used. Further, the management server 20 may have a configuration in which the management server 20 aggregates the number of customers that performed transactions in each cash register terminal 10 per hour and registers the aggregation result by associating with the current year, month, day, and time range, in the customer count history data D1. Further, the customer count history data D1 may record other factors such as weather and temperature of the time range as well as the number of customers.

Further, the storage unit 27 stores a terminal information table T1 in which the cash register number for identifying each of the cash register terminals 10 or the terminal ID for identifying each of the clerk terminals 30 is associated with addresses used in communication with these terminals or the like and stored. The control unit 21 specifies the addresses of the cash register terminals 10 and the clerk terminals 30 to which various pieces of information is to be transmitted, by referring to the terminal information table T1.

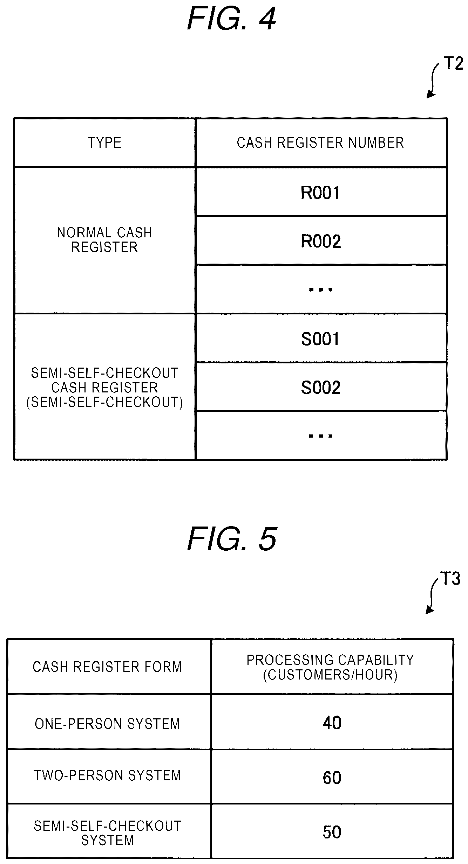

Further, the storage unit 27 stores a cash register management table T2 which records the number of the cash register terminals 10 for each type. FIG. 4 is a diagram schematically showing an example of a data configuration of the cash register management table T2. As shown in FIG. 4, the cash register management table T2 stores the cash register number of the cash register terminals 10 in association with the type of the cash register terminals 10. Here, the number of cash register numbers stored for each type corresponds to the number of the cash register terminals 10 of each type. Further, the type of the cash register terminals 10 corresponds to the cash register form. For example, the semi-self-checkout cash register 10b corresponds to the cash register form "semi-self-checkout". The number of the normal cash registers 10a means the total number of the cash register terminals 10 (normal cash registers 10a) in the one-person system and the two-person system since each of the cash register forms in the one-person system and the two-person system makes up the total number of the cash registers in a complementary way. The data configuration of the cash register management table T2 is not limited to this, and for example, for each type of the cash register terminals 10, the number of cash register terminals thereof may be directly associated and stored.

Further, the storage unit 27 stores a capacity management table T3 which records the processing capability of the cash register terminals 10 for each cash register form. FIG. 5 is a diagram schematically showing an example of the data configuration of the capacity management table T3. As shown in FIG. 5, the capacity management table T3 stores the processing capability of each cash register form in association with the cash register form of the cash register terminals 10. The processing capability means the number of customers (the number of transactions) who may be processed per unit time (for example, one hour) in one cash register terminal 10.

It is preferable that the processing capability is set based on an actual value of each cash register form. For example, the processing capability may be an average value or an upper limit value of the number of customers processed by the cash register terminals 10 in each cash register form per unit time. In the case of an example of FIG. 5, the capacity management table T3 shows that the processing capability per hour is 40 customers in the one-person system, 60 customers in the two-person system, and 50 customers in the semi-self-checkout system. The notation method of processing capability is not limited to the example of FIG. 5. For example, the processing capability of the two-person system may be represented by the ratio (150% and the like) with respect to the processing capability of the one-person system.

Further, the management server 20 includes a functional unit realized by cooperation of the control unit 21 (CPU) and the program stored in the ROM or the storage unit 27. Specifically, as shown in FIG. 3, the control unit 21 (CPU) executes the program so that functional units such as a state management unit 211, an operation planning unit 212, and an output control unit 213, are realized on the RAM.

The state management unit 211 manages the state of each cash register terminal 10 based on the state information transmitted from the cash register terminals 10. More specifically, the state management unit 211 manages the state of the cash register terminals 10 in association with each cash register number thereof, whether the cash register terminal 10 is in an operation state or a non-operation state, in binary information or the like. Further, in a case where the cash register terminal 10 in an operation state is the normal cash register 10a, the state management unit 211 manages information indicating a cash register form (one-person system or two-person system) in association with the cash register number of the cash register terminal 10. The state management unit 211 may manage the state of each cash register terminal 10 using the cash register management table T2.

The operation planning unit 212 estimates the number of customers (hereinafter, referred to as the number of expected customers) to be processed during a predetermined period in the present or future and derives the operation planning of the cash register terminals 10 which may process the number of expected customers.

The operation planning unit 212 starts processing when the operation planning unit 212 detects a predetermined trigger. Here, the trigger is not particularly limited, and may be in various forms. For example, the operation planning unit 212 may detect the support request information transmitted from the cash register terminal 10 as a trigger. Further, the operation planning unit 212 may detect that a predetermined operation is performed in the input unit 25 as a trigger.

When the processing is started, the operation planning unit 212 reads the number of past customers recorded during a target period (month, day, and time range) to be an estimation target of the number of expected customers, from the customer count history data D 1. Here, the target period is not particularly limited, and may be any month, day, and time range. Further, the operation planning unit 212 may be configured to set the target period according to the type of a trigger.

For example, in a case where the support request information is set as a trigger, the operation planning unit 212 may set month, day, and time range corresponding to the current date and time at which the support request information is received, as the target period. As an example, it is assumed that the support request information is received at 15:10 on February 10th, 2016. In this case, the operation planning unit 212 reads the number of past customers recorded during the time range of 15:00 to 16:00 on February 10th as the target period, from the customer count history data D 1.

Further, for example, in a case where an operation specifying a future period (month, day, time range) is triggered, the operation planning unit 212 may set the specified period as a target period. As an example, a case where February 10th to 15th of 2016 is specified is assumed. In this case, the operation planning unit 212 sets each time range (one hour unit) of February 10th to 15th as the target period and reads the number of past customers recorded during the target period, from the customer count history data D 1.

When the operation planning unit 212 reads the number of past customers from the customer count history data D1, the operation planning unit 212 estimates the number of expected customers to be processed during the target period based on the number of the customers. Here, the method of estimating the number of expected customers is not particularly limited. For example, the operation planning unit 212 may set an average value or the maximum value of the number of customers read during the target period for the past several years as the number of expected customers during the target period. Further, in a case where other factors such as weather, and temperature are recorded in the customer count history data D1, the operation planning unit 212 may estimate the number of expected customers by considering those factors.

Further, when the number of expected customers is estimated, the operation planning unit 212 derives the operation planning of the cash register terminals 10, which may process the number of expected customers, based on the data stored in the cash register management table T2 and the capacity management table T3. Specifically, the operation planning unit 212 calculates the number of customers that may be processed during the target period by multiplying the number of the cash register terminals 10 for each cash register form (type) by the processing capability of the cash register terminals 10 for each cash register form. Next, the operation planning unit 212 derives the cash register forms (types) and the number of the cash register terminals 10 whose multiplication result is equal to or greater than the number of expected customers, as an operation planning. Based on the operation planning, the operation planning unit 212 specifies the cash register number and the cash register form of the cash register terminals 10 to be an operation target. In a case where the unit time indicating the processing capability differs from the time interval of the target period, the operation planning unit 212 normalizes the processing capability according to the time interval of the target period.

The output control unit 213 is a functional unit that controls the output of instruction information for instructing an operation of the cash register terminals 10 or the like. For example, the output control unit 213 cooperates with the second communication I/F 24 to transmit instruction information (operation instruction information) for instructing the cash register terminals 10 to be operated to each of the clerk terminals 30. In the operation instruction information, it is assumed that the cash register number and the cash register form of the cash register terminals 10 set as an operation target by the operation planning unit 212 are instructed.

Further, the output control unit 213 cooperates with the first communication I/F 23 to transmit operation instruction information for instructing an operation to each cash register terminal 10 set as an operation target by the operation planning unit 212. The transmission destination of the operation instruction information is not limited to the above example. For example, the output control unit 213 may transmit operation instruction information for instructing the cash register terminals 10 to be operated, to each of the cash register terminals 10 that transmitted support request information.

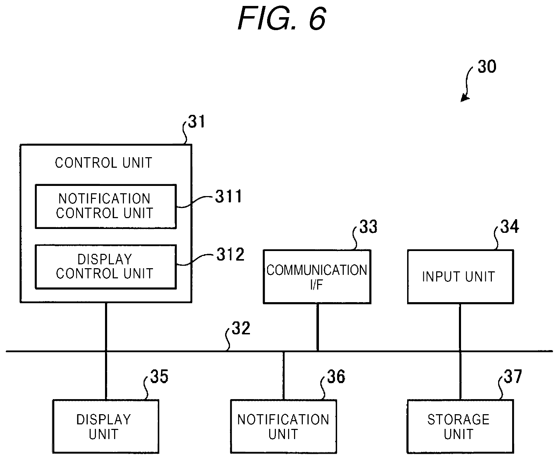

Returning to FIG. 1, the clerk terminal 30 is a portable terminal carried by a clerk of the store, such as a smartphone or a wrist-type watch. The clerk terminal 30 includes, for example, a configuration as shown in FIG. 6. Here, FIG. 6 is a diagram showing a configuration example of the clerk terminal 30. As shown in FIG. 6, the clerk terminal 30 includes a control unit 31 in a computer configuration composed of a CPU, ROM, RAM, and the like. Further, the control unit 31 includes a timer function such as an RTC.

In the control unit 31, a communication I/F 33, an input unit 34, a display unit 35, a notification unit 36, and a storage unit 37 are connected to each other via a bus 32.

The communication I/F 33 is a wireless communication I/F for connecting to the network N2. The input unit 34 includes an input device such as a keyboard and a pointing device. The input unit 34 receives an operation input from an operator via the input device and notifies the control unit 31 of a signal corresponding to the operation content thereof.

The display unit 35 includes a display device such as a liquid crystal display. The display unit 35 displays various pieces of information under the control of the control unit 31. The notification unit 36 performs notification by light, sound, vibration, or the like. The storage unit 37 includes a storage device such as an HDD and an SSD. The storage unit 37 stores various programs executed by the control unit 31 (CPU), setting information, and the like.

Further, the clerk terminal 30 includes a functional unit realized by cooperation of the control unit 31 (CPU) and a program stored in the ROM or the storage unit 37. Specifically, as shown in FIG. 6, the control unit 31 (CPU) executes the program so that functional units such as a notification control unit 311 and a display control unit 312 are realized on the RAM.

In a case where the state of the clerk terminal 30 satisfies a predetermined condition, the notification control unit 311 performs notification by operating the notification unit 36. For example, the notification control unit 311 operates the notification unit 36 on condition that instruction information is received from the management server 20. The notification control unit 311 may perform notification by screen display in cooperation with the display control unit 312.

The display control unit 312 controls display on the screen of the display unit 35. For example, the display control unit 312 causes the display unit 35 to display an operation screen or the like related to the operations of its own device.

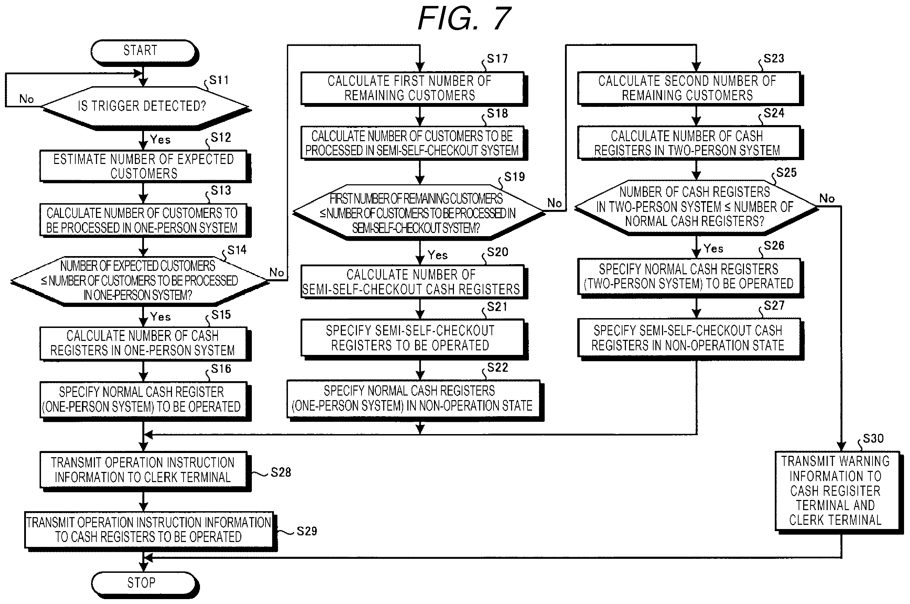

Next, the operations of the cash register terminal 10, the management server 20, and the clerk terminal 30 will be described. First, the operation of the management server 20 related to the derivation of operation planning will be described with reference to FIG. 7. FIG. 7 is a flowchart showing an example of processing executed by the management server 20.

First, the operation planning unit 212 waits until the operation planning unit 212 detects a trigger such as support request information (Act 11: No). When the trigger is detected (Act 11: Yes), the operation planning unit 212 estimates the number of expected customers during the target period based on the number of past customers stored in the customer count history data D1 (Act 12). Next, the operation planning unit 212 calculates the number of customers who may be processed during the target period in the normal cash registers 10a in the one-person system, as the number of customers to be processed in the one-person system (Act 13). Specifically, the operation planning unit 212 calculates the number of customers to be processed in the one-person system by multiplying the number of the normal cash registers 10a recorded in the cash register management table T2 by the processing capability of the one-person system recorded in the capacity management table T3. In a case where there are cash register terminals 10 that are operating in a cash register form other than the one-person system, the number of customers to be processed in the one-person system may be calculated by excluding the number of the cash register terminals 10 or the number of customers who may be processed by the cash register terminals 10.

Next, the operation planning unit 212 compares the number of expected customers with the number of customers to be processed in the one-person system and determines whether or not the number of customers to be processed in the one-person system is equal to or greater than the number of expected customers (Act 14). Here, in a case where the number of customers to be processed in the one-person system is equal to or greater than the number of expected customers, it means that the number of expected customers may be processed by operating all the normal cash registers 10a in the one-person system. Then, on condition that the number of customers to be processed in the one-person system is equal to or greater than the number of expected customers (Act 14: Yes), the operation planning unit 212 calculates the minimum number of the normal cash registers 10a capable of processing the number of expected customers, as the number of cash registers in the one-person system (Act 15). For example, the operation planning unit 212 calculates a value obtained by dividing the number of expected customers by the processing capability of the one-person system and rounding up the value below the decimal point, as the number of the cash registers in the one-person system. The method of calculating the number of cash registers in the one-person system is not limited to this, and for example, a value obtained by rounding off to the nearest whole number may be set as the number of cash registers in the one-person system.

Next, the operation planning unit 212 specifies the cash register number of the normal cash registers 10a to be operated, based on the state of each cash register terminal 10 (Act 16), and the processing proceeds to Act 28. Specifically, the operation planning unit 212 calculates the number of the normal cash registers 10a to be newly operated by subtracting the number of the normal cash registers 10a in an operation state from the number of cash registers in the one-person system. Further, the operation planning unit 212 selects as many cash register numbers as the normal cash registers 10a to be newly operated from the cash register numbers of the normal cash registers 10a in a non-operation state. The method of selecting the cash register numbers is not particularly limited. For example, the cash register numbers may be selected based on predetermined priority or randomly selected.

Further, in Act 14, in a case where the number of customers to be processed in the one-person system is less than the number of expected customers, it means that the number of expected customers may not be processed even if all the normal cash registers 10a are operated in the one-person system. On condition that the number of customers to be processed in the one-person system is less than the number of expected customers (Act 14: No), the operation planning unit 212 calculates the number of the remaining customers (hereinafter, referred to as the first number of remaining customers) obtained by subtracting the number of customers to be processed in the one-person system from the number of expected customers (Act 17).

Next, the operation planning unit 212 calculates the number of customers who may be processed in the semi-self-checkoutcash registers 10b during the target period, as the number of the customers to be processed in the semi-self-checkout system (Act 18). More specifically, the operation planning unit 212 calculates the number of customers to be processed in the semi-self-checkout system by multiplying the number of the semi-self-checkout cash registers 10b recorded in the cash register management table T2 by the processing capability of the semi-self-checkoutsystem recorded in the capacity management table T3.

Next, the operation planning unit 212 compares the first number of remaining customers with the number of customers to be processed in the semi-self-checkout system and determines whether or not the number of customers to be processed in the semi-self-checkout system is equal to or greater than the first number of remaining customers (Act 19). Here, in a case where the number of customers to be processed in the semi-self-checkout system is equal to or greater than the first number of remaining customers, it means that the number of expected customers may be processed by operating all the normal cash registers 10a in the one-person system while operating all the semi-self-checkout cash registers 10b. On condition that the number of customers to be processed in the semi-self-checkout system is equal to or greater than the first number of remaining customers (Act 19: Yes), the operation planning unit 212 calculates the minimum number of the semi-self-checkout cash registers 10b that may process the first number of remaining customers, as the number of the cash registers in the semi-self-checkout system (Act 20). The method of calculating the number of the cash registers in the semi-self-checkout system is assumed to be the same as the one of calculating the number of the cash registers in the one-person system.

Next, the operation planning unit 212 specifies the cash register number of the semi-self-checkout cash registers 10b to be operated, based on the state of each semi-self-checkoutcash register 10b (Act 21). Specifically, the operation planning unit 212 calculates the number of the semi-self-checkoutcash registers 10b to be newly operated by subtracting the number of the semi-self-checkout cash registers 10b in an operation state from the number of the cash registers in the semi-self-checkoutsystem. Further, the operation planning unit 212 selects as many cash register numbers as the semi-self-checkout cash registers 10b to be newly operated from the cash register numbers of the semi-self-checkout cash registers 10b in a non-operation state.

Next, the operation planning unit 212 specifies the cash register numbers of the normal cash registers 10a currently being in a non-operation state, as an operation target in the one-person system (Act 22), and the processing proceeds to Act 28.

Further, in Act 19, in a case where the number of customers to be processed in the semi-self-checkoutsystem is less than the first number of remaining customers, it means that the number of expected customers may not be processed even if all the normal cash registers 10a are operated in the one-person system and all the semi-self-checkout cash registers 10b are operated. Then, on condition that the number of the customers to be processed in the semi-self-checkout system is less than the first number of remaining customers (Act 19: No), the operation planning unit 212 calculates the number of the remaining customers obtained by subtracting the number of customers to be processed in the one-person system and the number of customers to be processed in the semi-self checkout system from the number of expected customers, as the second number of remaining customers (Act 23).

Next, the operation planning unit 212 calculates the number of the normal cash registers 10a in the two-person system which may process the second number of remaining customers, as the number of the cash registers in the two-person system (Act 24). Specifically, the operation planning unit 212 calculates a value obtained by dividing the second number of remaining customers by a value obtained by subtracting the processing capability of the one-person system from the processing capability of the two-person system and rounding up the value below the decimal point, as the number of the cash registers in the two-person system.

Next, the operation planning unit 212 compares the number of the cash registers in the two-person system with the number of the normal cash registers 10a and determines whether or not the number of the cash registers in the two-person system is equal to or less than the number of the normal cash registers 10a (Act 25). Here, in a case where the number of the cash registers in the two-person system is equal to or less than the number of the normal cash registers 10a, it means that the number of expected customers may be processed by operating all the normal cash registers 10a and the semi-self-checkout cash registers 10b, and operating as many normal cash registers 10a as the cash registers in the two-person system, in the two-person system.

On condition that the number of the cash registers in the two-person system is equal to or less than the number of the normal cash registers 10a (Act 25: Yes), the operation planning unit 212 specifies (selects) as many normal cash registers 10a as the cash registers to be operated in the two-person system (Act 26). Here, the method of selecting the normal cash registers 10a is not particularly limited. For example, the operation planning unit 212 may preferentially select from the normal cash registers 10a in an operation state or the normal cash registers 10a in a non-operation state. The remaining normal cash registers 10a other than the normal cash registers 10a selected as the two-person system will be operated in the one-person system.

Next, the operation planning unit 212 specifies the cash register numbers of the semi-self-checkout cash registers 10b currently being in a non-operation state, as an operation target (Act 27), and the processing proceeds to Act 28.

In the following Act 28, the output control unit 213 transmits operation instruction information for instructing the cash register numbers specified as an operation target to each of the clerk terminals 30 (Act 28). Here, the number of the cash register numbers means the number of the cash register terminals 10 to be operated. Further, the cash register number of the semi-self-checkout cash registers 10b means a cash register form of the semi-self-checkout. Further, in a case where an operation target is the cash register number of the normal cash registers 10a, the output control unit 213 instructs by associating a cash register form (one-person system or two-person system) to be operated.

Next, the output control unit 213 transmits operation instruction information for instructing an operation to each cash register terminals 10 of which the cash register number is specified as an operation target (Act 29), and the processing is ended.

Further, in the Act 25, in a case where the number of the cash registers in the two-person system exceeds the number of the normal cash registers 10a, it means that there is a possibility that the number of expected customers may not be processed in the current configuration of the cash register terminals 10. Therefore, on condition that the number of the cash registers in the two-person system exceeds the number of the normal cash registers 10a (Act 25: No), the output control unit 213 transmits instruction information (warning information) for warning that there is a possibility that the processing may not be performed, to each of the cash register terminals 10 in an operation state and the clerk terminals 30 (Act 30), and the processing is ended.

In the above processing, in a case where the number of the cash registers in the two-person system exceeds the number of the normal cash registers 10a, the output control unit 213 transmits the warning information to each of the clerk terminals 30, but the transmission destination is not limited to this. For example, the output control unit 213 may transmit the warning information to each of the cash register terminals 10 in an operation state. Further, the output control unit 213 may transmit the warning information to each of the clerk terminals 30 which transmitted support request information. Further, the output control unit 213 may include information for instructing all the normal cash registers 10a to be operated in the two-person system and instructing all the semi-self-checkout cash registers 10b to be operated, in the warning information.

As described above, the management server 20 derives the cash register form and the number of the cash registers that may process the number of expected customers, as operation planning, based on each cash register form and the processing capability of the cash register terminals 10. In this way, since the management server 20 may specify the cash register terminals 10 to be operated and the cash register form thereof within the range of the cash register forms that may be realized in a store, more appropriate operation planning of the cash register terminals 10 may be derived. Further, the management server 20 may instruct the cash register terminals 10 and the clerk terminals 30 to operate the cash register terminals 10 by transmitting the operation instruction information.

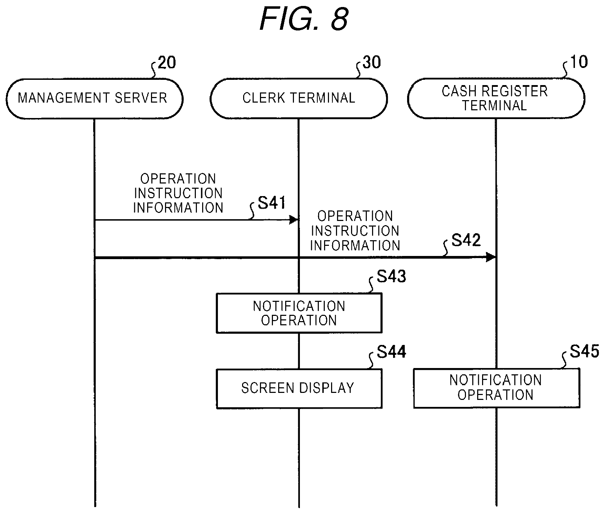

Next, the cooperative operation between the cash register terminal 10, the management server 20, and the clerk terminal 30 will be described with reference to FIG. 8. FIG. 8 is a sequence diagram showing an example of a cooperative processing performed in the cash register terminal 10, the management server 20, and the clerk terminal 30.

First, the output control unit 213 of the management server 20 transmits operation instruction information to all the clerk terminals 30 and the cash register terminals 10 to be operated (Acts 41 and 42). Here, Acts 41 and 42 correspond to the processing of Acts 28 and 29 described in FIG. 7.

In the clerk terminal 30 that received the operation instruction information, the notification control unit 311 causes the notification unit 36 to notify the reception of the operation instruction information (Act 43). Next, the display control unit 312 causes the display unit 35 to display a screen for instructing the cash register terminal 10 to be operated based on the operation instruction information (Act 44). For example, the display control unit 312 causes the display unit 35 to display a screen (not shown) indicating the cash register number and the cash register form of the cash register terminals 10 to be operated. In this way, a clerk carrying the clerk terminal 30 may check the cash register terminals 10 to be operated and the cash register form thereof according to the operation instruction information displayed on the display unit 35.

On the other hand, in the cash register terminal 10 that received operation instruction information, the notification control unit 115 causes the notification unit 36 to notify that the corresponding cash register terminal 10 is set an operation target (Act 45). In this way, since a clerk may easily identify which cash register terminal 10 is to be operated, it is possible to improve the convenience of operating the cash register terminals 10.

In a case where warning information is transmitted from the management server 20, the cash register terminal 10 and the clerk terminal 30 call the clerk's attention by causing the display unit 35 to display a warning screen indicating the contents thereof.

Although embodiments have been described above, this embodiment has been presented by way of example and is not intended to limit the scope of the exemplary embodiment. This new embodiment may be implemented in other various forms, and various omissions, substitutions, and changes may be made without departing from the gist of the exemplary embodiment. This embodiment or variations thereof are included in the scope and gist of the exemplary embodiment and are included in the exemplary embodiment described in the claims and the equivalent scope thereof.

For example, in the processing related to the derivation of the operation planning described above, the cash register terminals 10 to be operated may be specified by considering the number of clerks. Specifically, the operation planning unit 212 calculates the number of the cash register terminals 10 that may be operated for each cash register type, from the number of the clerks working in the store. Then, the operation planning unit 212 specifies the cash register terminals 10 to be operated by executing the processing described in FIG. 7, based on the calculated number of the cash register terminals 10 for each cash register type.

Further, in the processing related to the derivation of the operation planning described above, an example of deriving operation planning using all the cash register terminals 10 arranged in the store has been described, but some of the cash register terminals 10 may be excluded to derive the operation planning. For example, in a case where a predetermined number of the normal cash registers 10a are determined to be operating in the one-person system all the time, the operation planning unit 212 derives the operation planning by using the number of the remaining normal cash registers 10a except for the number of the normal cash registers 10a. Further, the operation planning unit 212 derives the operation planning by using the number of remaining expected customers obtained by subtracting a processing number (processing capability × the number of cash registers for processing) of the normal cash registers 10a to be operated in the one-person system all the time from the number of expected customers.

Further, in the above embodiment, the operation planning unit 212 specifies the cash register terminals 10 to be operated in the order of one-person system, semi-self-checkout system, and two-person system, but the priority thereof is not limited thereto. For example, the operation planning unit 212 may specify the cash register terminals 10 to be preferentially operated in the order of semi-self-checkout system, one-person system, and two-person system.

An example of the related art includes JP-A-2002-140768.

## Claims

1. An information processing device comprising:
an estimation unit that estimates the number of customers to be processed during a predetermined period in the present or future as the number of expected customers based on the number of past customers recorded as a history;
a storage unit that stores processing capability indicating the number of customers who may be processed per unit time in a cash register form in association with the cash register form realizable in a cash register installed in a store;
a derivation unit that derives a cash register form and the number of cash registers capable of processing the number of expected customers based on the processing capability of each cash register form stored in the storage unit; and
an output unit that outputs instruction information for instructing as many derived cash register forms of cash registers as the derived number of cash registers to be operated.

2. The device according to claim 1, further comprising:
an acceptance unit that accepts a support request from an external device,
wherein, on condition that the acceptance unit accepts the support request, the estimation unit sets a time range when the current date and time falls as the predetermined period and estimates the number of expected customers based on the number of past customers corresponding to the predetermined period in the history.

3. The device according to claim 1 or 2,
wherein, in a case where the number of cash registers derived from the derivation unit exceeds the number of cash registers installed in the store, the output unit outputs instruction information for warning that there is a possibility that the number of expected customers may not be processed.

4. The device according to any one of claims 1 to 3,
wherein the output unit outputs the instruction information to each of portable terminals carried by a clerk of the store.

5. An information processing system comprising:
an estimation unit that estimates the number of customers to be processed during a predetermined period in the present or future as the number of expected customers based on the number of past customers recorded as a history;
a storage unit that stores processing capability indicating the number of customers who may be processed per unit time in a cash register form in association with the cash register form realizable in a cash register installed in a store;
a derivation unit for deriving a cash register form and the number of cash registers capable of processing the number of expected customers based on the processing capability of each cash register form stored in the storage unit; and
an output unit that outputs instruction information for instructing as many derived cash register forms of cash registers as the derived number of cash registers to be operated.

6. The system according to claim 5, further comprising:
an acceptance unit that accepts a support request from an external device,
wherein, on condition that the acceptance unit accepts the support request, the estimation unit sets a time range when the current date and time falls as the predetermined period and estimates the number of expected customers based on the number of past customers corresponding to the predetermined period in the history.

7. The system according to claim 5 or 6,wherein, in a case where the number of cash registers derived from the derivation unit exceeds the number of cash registers installed in the store, the output unit outputs instruction information for warning that there is a possibility that the number of expected customers may not be processed.

8. The device according to any one of claims 5 to 7, wherein the output unit outputs the instruction information to each of portable terminals carried by a clerk of the store.

9. A method for processing information, comprising the steps of:
- estimating, by an estimation unit, the number of customers to be processed during a predetermined period in the present or future as the number of expected customers based on the number of past customers recorded as a history;
- storing, by a storage unit, processing capability indicating the number of customers who may be processed per unit time in a cash register form in association with the cash register form realizable in a cash register installed in a store;
- deriving, by a derivation unit, a cash register form and the number of cash registers capable of processing the number of expected customers based on the processing capability of each cash register form stored in the storage unit; and
- outputting, by an output unit, instruction information for instructing as many derived cash register forms of cash registers as the derived number of cash registers to be operated.

10. The method according to claim 9, further comprising the step of:
- accepting, by an acceptance unit, a support request from an external device,
wherein, on condition that the acceptance unit accepts the support request, the estimation unit sets a time range when the current date and time falls as the predetermined period and estimates the number of expected customers based on the number of past customers corresponding to the predetermined period in the history.

11. The method according to claim 9 or 10, wherein the outputting step comprises outputting, by the output unit, instruction information for warning that there is a possibility that the number of expected customers may not be processed, in a case where the number of cash registers derived from the derivation unit exceeds the number of cash registers installed in the store.

12. The method according to any one of claims 9 to 11, wherein the outputting step comprises outputting, by the output unit, the instruction information to each of portable terminals carried by a clerk of the store.

13. A computer-readable medium having computer-executable instructions adapted to cause the computer system to perform the method according to any one of claims 9 to 12.

14. A computer program product comprising program code means stored on a computer readable medium for performing the method according to any one of claims 9 to 12, when the program product is run on a computer.
